# EUROPEAN PATENT SPECIFICATION

(11) **EP 0 998 635 B1**
(45) Date of publication and mention of the grant of the patent: **10.11.2004**
(21) Application number: 98938032.4
(22) Date of filing: 24.07.1998
(51) Int. Cl.: F16B 21/00, F16B 13/08, F16B 13/00

(54) **SCREW TIPPED ANCHOR ASSEMBLY**
VERANKERUNGSEINHEIT MIT SCHRAUBENSPITZE
ENSEMBLE ANCRAGE A VIS D'EXTREMITE

(30) Priority: 24.07.1997 US 53640 P
(43) Date of publication of application: 10.05.2000
(73) Proprietor: Cobra Anchors Co. Ltd., East Montreal P.Q. (CA)
(72) Inventor: McSHERRY, Thomas W., Sinking Spring, PA 19608 (US)
(74) Representative: Godwin, Edgar James
(86) International application number: PCT/US1998/015550
(87) International publication number: WO 1999/005419

(56) References cited:
- GB-A- 589 084
- US-A- 3 127 807
- US-A- 3 248 994
- US-A- 4 697 969
- US-A- 5 067 864

## Description

### Field of the Invention

This invention relates to anchoring devices for fastening objects to hollow walls of plaster board, masonry, brick and the like wherein elongated fasteners, such as bolts, screws, etc. may be attached for further attachment of a work piece or fixture. More particularly, the invention relates to so-called toggle bolt anchors which penetrate wall board material and the like with a nut or anchor portion extending along a first axis, the anchor portion being moveable to a position extending along an axis normal to the first axis so that a threaded bolt may engage the threads of the nut to draw the nut against the back surface of the wall board.

### History of the Invention

In U.S. patent 5,221,169 (a copy of which is attached hereto and incorporated herein by reference) there is disclosed an anchor assembly for fasteners which comprises a pair of elongated wire-like legs supported in parallel relation with an anchor moveably supported on the legs and moveable from a first position substantially in alignment with the legs to a position transverse to the legs, and wherein the anchor defines tracks on each side to support the anchor on the legs. Pivotal movement of the anchor is achieved by the interaction between the tracks on the anchor and the legs upon which the anchor rides.

The problem with most anchors of the above type is that a hole has to be drilled in the wall before the anchor assembly can be inserted in the hole to dispose the anchor portion in the wall hollow to be drawn against the back surface of the wall. Drilling, especially in friable wall board material usually results in a damaged rear surface and thus a weakened wall. This results even in the instance where a drill tip is applied to a leading end of an anchor in such an anchor assembly.

U.S. Patent No. 5,067,864 issued on November 26, 1991 discloses a self-drilling fastener mountable to plasterboard walls from one side of the wall and used with a screw. The fastener comprises a fastener body and a toggle clamp pivotable between an insertion position and a toggle position, as well as a drilling tip. The drilling tip is used to drill a hole in the wall of a size to accommodate the fastener body. The drilling tip can be part of the fastener body and extend axially beyond the toggle clamp in its insertion position. Alternatively, the drilling tip is part of the toggle clamp and extends axially beyond the fastener body in the insertion position of the toggle clamp. The toggle clamp has a ramp that, when engaged by the tip of the screw, causes the toggle clamp to rotate from its insertion position to its toggle position.

### Invention

The present invention is an improvement over the anchor assembly disclosed in U.S. 5,221,169 and provides a screw tip on an end of the anchor member of the anchor assembly. The legs which are integral with and extend distally from a hollow cylindrical body with a proximal flanged end, are structured as posts, as opposed to wire-like legs, so as to stabilize the anchor as the screw tip of the anchor screws into the wall when the assembly is rotated with a tool, such as a screwdriver for which the aperture at the proximal flanged end of the cylindrical body is formed as a tool receptor as well as a fastener receptor. The screw tip is also formed with a flute which extends from the tip of the screw tip proximally to a channel which extends a distance sufficient to dispose of the wall material that is cut into the flute while the threads of the screw tip are taping the wall material which becomes compressed between the relatively high turns of the screw thread but less than if the material access flute had not been provided. Thus a clean cut through the wall material without exploding the material on the back side of the wall is ensured.

Therefore, in accordance with the present invention, there is provided a wall anchor assembly comprising:
an assembly axis at the longitudinal center of the assembly;
a collar;
a pair of posts extending from said collar;
the collar having means for passing a part of a bolt through said collar;
means for connecting the posts to each other, distal from the collar;
an anchor member, captive between said posts and between said collar and said connecting means;
said anchor member having:
   an anchor axis at the longitudinal center of the anchor member, and
   an anchor body portion;
a screwing configuration in which:
   the anchor axis is substantially parallel to the assembly axis,
   the anchor body portion and posts form a partly cylindrical body portion without threads; and
   there is a chordal surface on a chord of the partly cylindrical body portion; said anchor member further having:
      means for screwing through the wall;
      means for receiving the bolt perpendicular to the anchor axis and for engaging a bolt thread on said bolt; and
      means for rotating the anchor axis perpendicular to the posts and for locating said bolt in said receiving means, which receiving means further serves as a means for drawing the anchor member against the wall to clamp the wall
      anchor assembly to the wall;
a retaining means comprising:
   a pair of parallel inner facing surfaces in the posts;
   a pair of outer facing surfaces on the anchor member, said outer facing surfaces closely fitting within the inner facing surfaces;
   a pair of outer non-facing surfaces on the anchor member;
*characterised in that* said retaining means further comprises:
at least one proximal track extending from one of the outer non-facing surfaces beyond an edge of the facing surfaces, said first track not fitting within the inner facing surfaces and thereby engaging an edge of the facing surfaces; and
at least one distal track extending from an opposite of the outer non-facing surfaces beyond an edge of the facing surfaces, said second track not fitting within the inner facing surfaces and thereby engaging an other edge of the facing surfaces.

Also in accordance with the present invention, there is provided a method of anchoring a bolt to a wall, said method comprising the steps of:
applying a pointed tip of an anchor member of an anchor assembly to the wall;
engaging a screwdriver to a screw head of the anchor assembly;
pressing said screw head with the screwdriver to locate and depress the pointed tip;
rotating the screw head with the screwdriver:
   to transmit rotation from a collar to a pair of posts to the anchor member, slidably engaged to the pair of posts until said anchor assembly is sufficiently inserted in the wall,
inserting a bolt into the collar, which collar directs the bolt toward a proximal end of an anchor member;
pressing the bolt against a ramp on a proximal end of the anchor member;
by said pressing, releasing the anchor member from a securing detent and sliding the anchor member distally to disengage a ridge from a groove;
after disengaging, pressing a ramp surface facing the distal end, said ramp surface located on the anchor member between the distal and proximal ends of the anchor member, against a protrusion on the posts, which ramp surface pressing, together with the pressing against the proximal ramp, rotates the anchor member to perpendicular to the posts;
said collar locating the bolt against a receiving means on the anchor member;
rotating the bolt to engage the receiving means and to pull the chordal surface of the anchor member against the wall, thereby clamping the anchor assembly to the wall.

### The Drawings

Fig. 1 is a side elevational view of the collar and posts of the anchor assembly of the invention;
Fig. 2 is a section taken along the line A-A of Fig. 1;
Fig. 3 is a section taken along the line C- C of Fig. 1;
Fig. 4 is a section taken along the line B - B of Fig. 1;
Fig. 5 is a bottom plan view showing the flanged end of the collar and post portion of the assembly;
Fig. 6 is a front plan view of the screw tipped anchor portion of the anchor assembly of the invention;
Fig. 7 is a side plan view of the anchor portion of Fig. 6;
Fig. 8 is a rear plan view of the anchor portion of Fig. 6:

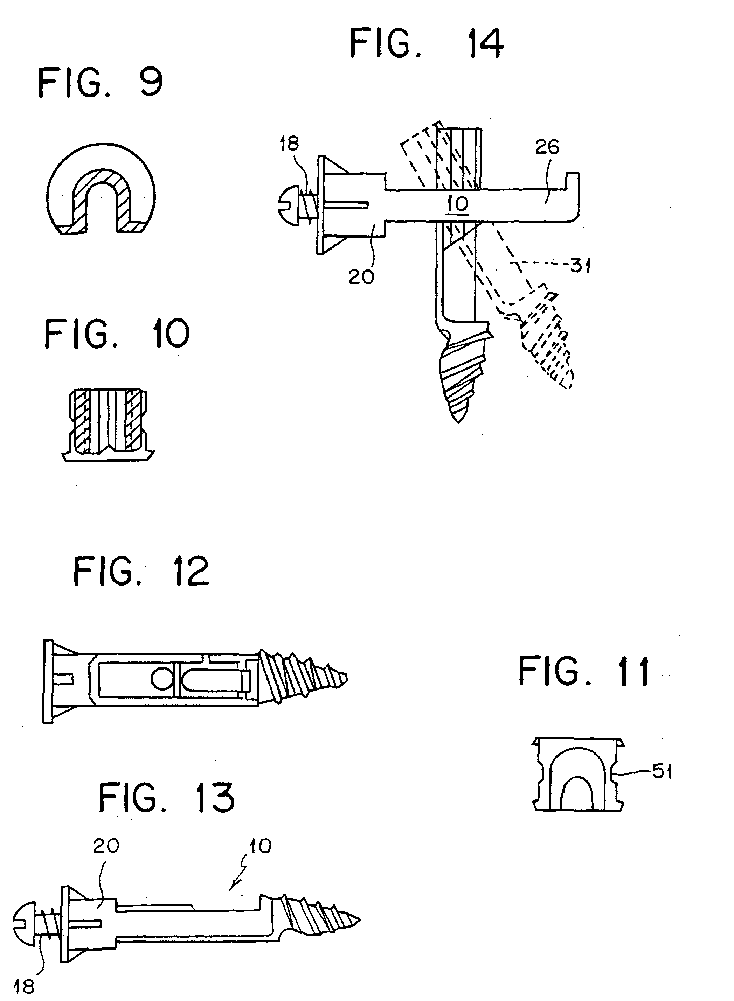

Fig. 9 is a section taken along the line A - A of Fig. 7:
Fig. 10 is a section taken along the line B - B of Fig 7;
Fig. 11 is an end view of the anchor of Fig.6;
Fig. 12 is a section taken along the line C - C of Fig. 7;
Fig. 13 is a side elevational view of the anchor of the invention in assembly and with a mock fastener head extending from the proximal end of the anchor assembly; and
Fig. 14 is a side elevational view of the assembly of Fig. 13 in "action" showing the positions of the anchor portion as it is pivoted to its anchoring position.

### Description

The anchor assembly 10 includes a collar 20 having an aperture 22 dimensioned and configured to receive the shank portion of a bolt 18, or the like. A pair of posts, 24,26 extend integrally from the collar in parallel relation on either side of the post and collar portion of the assembly. The posts are connected to one another at their distal ends by a bent connecting end 28. The collar and aperture are configured to assure alignment between anchor member 31 and bolt fastener 18.

The anchor portion has forward and rearward tracks 35,36 disposed on opposite sides of the anchor portion which slideably engage the opposite sides of the posts as the anchor portion is initially moved forward by engagement of a forewardly moving bolt. The anchor portion is maintained in parallel relation with the posts by engagement of the ridges 40 and channels 50 on the posts and sides of the anchor portion respectively. When the anchor portion channels pass the end of the post ridges, the anchor is permitted to move from its position with its axis parallel with the posts to a position with its axis normal to the posts so that the bolt may be threaded in the threaded hole 60 of the anchor portion to draw the anchor portion against the back surface of the wall.

An internal ramp 70 is provided at the proximal end of the anchor portion to engage the end of the bolt resulting in the directing of the anchor portion out of parallel with the with the posts. External ramps 80 on either side of the anchor portion between the forward and rearward tracks 36,36, which slide on the edges of the posts, interact with the connection 28 between the posts to assure out of parallel relationship with the posts as well.

There is a space 100 between the foreward and rearward tracks on either side of the anchor portion equal to the width of the posts to permit the 90 degree axes displacement of the anchor portion and collar and post portion. Channels 101 within these spaces receive the post ridges 40 when the anchor axis is normal to the axes of the posts.

The anchor portion and the collar and post portions are press fit in the assembly process. The assembly can be made of various materials, metal or plastic.

A significant part of the invention os the provision of a screw tip 125 on the distal end of the anchor portion together with a flute 126 with a cutting leading edge and which extends proximally to a channel 127. The leading edge 128 of the flute cuts the wall material which is deposited in the flute and given access to the channel thereby lessening the amount of wall board material which will be compressed between turns of the relatively high taping threads 129 of the screw tip and around the compression band 130 which runs between and parallel to the thread. The leading edge is distended and curves back at its proximal edge. This shape together with the screw threads draws the anchor through the wall material rather than pushing the material foreward as occurs with a drilling action

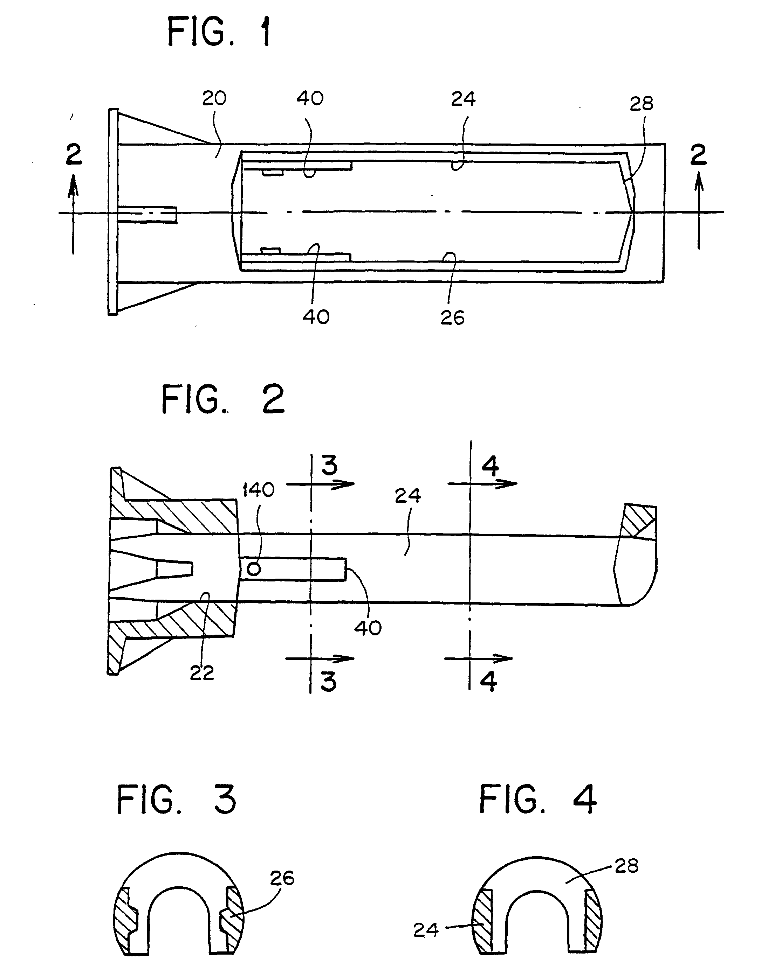

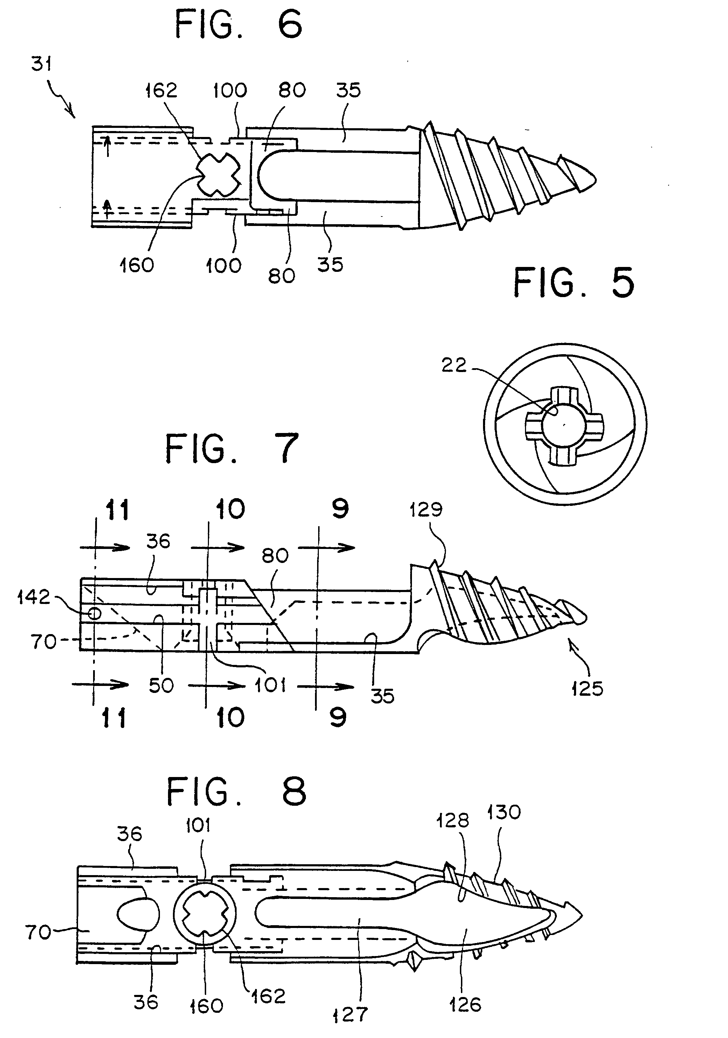

As in Fig. 2, protrusion 140 on ridge 40 of post 26 secures detent 142 (fig. 7) on channel 50 of anchor member 31.

Bolt 18 may be a bolt, a machine screw, a self-tapping screw, or the like. In the presently preferred embodiment, bolt 18 is a self tapping type screw having a coarse thread tapering smaller at shaft end to a truncated conical shaft tip, which engages an unthreaded hole 60 (Fig. 8) having four tappable ridges 160 protruding therein. Spaces 162 between ridges 160 provide a place for ridge material displaced by the tapping to go.

Bolt 18 has a head which receives either Phillips or blade screwdrivers, as does the cross-slot 200 of collar 20.

## Claims

1. A wall anchor assembly (10) comprising:
an assembly axis at the longitudinal center of the assembly (10);
a collar (20);
a pair of posts (24, 26) extending from said collar (20);
the collar (20) having means (22) for passing a part of a bolt (18) through said collar (20);
means (28) for connecting the posts (24, 26) to each other, distal from the collar (20);
an anchor member (31), captive between said posts (24, 26) and between said collar (20) and said connecting means (28);
said anchor member (31) having:
an anchor axis at the longitudinal center of the anchor member (31), and an anchor body portion;
a screwing configuration in which:
the anchor axis is substantially parallel to the assembly axis,
the anchor body portion and posts (24, 26) form a partly cylindrical body portion without threads; and
there is a chordal surface on a chord of the partly cylindrical body portion;
said anchor member (31) further having:
means (125) for screwing through the wall;
means (60) for receiving the bolt (18) perpendicular to the anchor axis and for engaging a bolt thread on said bolt (18); and
means for rotating (28, 70, 80) the anchor axis perpendicular to the posts (24, 26) and for locating said bolt (18) in said receiving means (60), which receiving means (60) further serves as a means for drawing the anchor member (31) against the wall to clamp the wall anchor assembly (10) to the wall;
a retaining means comprising:
a pair of parallel inner facing surfaces in the posts (24, 26);
a pair of outer facing surfaces on the anchor member (31), said outer facing surfaces closely fitting within the inner facing surfaces;
a pair of outer non-facing surfaces on the anchor member;
***characterised in that*** said retaining means further comprises:
at least one proximal track (36) extending from one of the outer non-facing surfaces beyond an edge of the facing surfaces, said proximal track (36) not fitting within the inner facing surfaces and thereby engaging an edge of the facing surfaces; and
at least one distal track (35) extending from an opposite of the outer non-facing surfaces beyond an edge of the facing surfaces, said distal track (35) not fitting within the inner facing surfaces and thereby engaging an other edge of the facing surfaces.

2. A wall anchor assembly (10) according to claim 1, ***characterised in that*** said anchor assembly further comprises
means (40, 50) in the screwing configuration:
for engaging the anchor member (31) with the anchor axis substantially parallel to the assembly axis, and
for transmitting axial rotation from the collar (20) to the anchor member (31).

3. A wall anchor assembly (10) according to claim 2, ***characterised in that*** the posts (24, 26), said collar (20) and said connecting means (28), by holding the anchor member (31) captive, further serve as means for retaining the anchor member (31) after disengagement from the bolt (18) and for repeatably relocating said bolt (18) in said receiving means (60).

4. A wall anchor assembly (10) according to claim 1, ***characterised in that*** said anchor assembly further comprises:
a detent as means (140, 142) for releasably securing the anchor member (31); and
a tongue (40) as an elongated protrusion on the inside surface and a
complementary groove (50) on the outside surface:
for maintaining the anchor member (31) engaged with the anchor axis substantially parallel to the posts (24, 26),
for transmitting axial rotation; and
for slidably releasing the anchor member (31) from the parallel.

5. A wall anchor assembly (10) according to claim 2, ***characterised in that*** the screwing means (125) comprises:
a dome having:
a base,
a pointed centering tip at the anchor axis, and
an outer surface there-between, tapering from the base to the pointed centering tip;
a single outwardly facing flute (126) defined by outer edges and extending proximally along one side of said outer surface radially of said anchor axis from said pointed tip to said base, said flute (126) being partially closed at said pointed centering tip along the side of said outer surface radially of said anchor axis opposite said one side because of a diminishing diameter along said outer surface;
said outer edges of said flute (126) comprising a leading cutting edge (128), for cutting a wall material, and a trailing edge;
an outer thread (129) extending from at the pointed tip and terminating at the base;
said flute (126) and said outer thread (129) being positioned relative to one another so as to serve as screw means for drawing the tip through the wall structure without drilling a hole in advance of said outer thread (129);
said collar (20), passing means (22), and bolt (18) further serving as means for disengaging the engaging means (40, 50) and for rotating the anchor axis, anchor member (31), and screwing means (125) perpendicular to the assembly axis, to form the assembly into an anchoring configuration;
said flute (126) communicating with and forming an extension of a channel (127) defined on the chordal surface for receiving the wall material cut and for expelling said wall material out the chordal surface.

6. A wall anchor assembly (10) according to claim 5, ***characterised in that*** said anchor assembly further comprises a compression band (130) between the thread (129).

7. A wall anchor assembly (10) according to claim 5, ***characterised in that*** the cutting leading edge (128) is distended and curves back at its proximal edge.

8. A wall anchor assembly (10) according to claim 7, ***characterised in that*** the collar (20) comprises flange means for limiting penetration of the collar (20) to substantially flush with an outer surface of the wall.

9. A wall anchor assembly (10) according to claim 8, ***characterised in that*** fin means are provided for limiting axial rotation of the collar (20) after the collar has penetrated the wall.

10. A wall anchor assembly (10) according to claim 2, ***characterised in that*** the passing means (22 ) further serves as means:
for directing the bolt (18) to a proximal end of the anchor member (31) when the anchor member is slidably engaged, and
for directing the bolt (18) to the receiving means (60) when the anchor member (31) is perpendicular to the posts (24, 26).

11. A wall anchor assembly (10) according to claim 1, ***characterised in that*** the engaging means (40, 50) comprises:
an elongated ridge (40) on at least one of the inside facing surfaces, and
a complementary groove (50) on the outside facing surface, for engaging the ridge (40).

12. A wall anchor assembly (10) according to claim 1, ***characterised in that*** the rotating means (28, 70, 80) comprises a connecting means engaging ramp surface (80) facing the distal end between the proximal and distal ends of the anchor member (31) for translating a longitudinal bolt induced force into a rotational force against the anchor member (31).

13. A wall anchor assembly (10) according to claim 12, ***characterised in that*** the collar (20) comprises means for receiving externally applied rotational energy.

14. A wall anchor assembly (10) according to claim 13, ***characterised in that*** said means for receiving externally applied rotational energy is a screw head, e.g. a Phillips type head.

15. A wall anchor assembly (10) according to claim 1, ***characterised in that*** said anchor assembly further comprises:
means (40, 50) in the screwing configuration:
for engaging the anchor member (31) with the anchor axis substantially parallel to the assembly axis, and
for transmitting axial rotation from the collar (20) to the anchor member (31);
in which the posts (24, 26), said collar (20) and said connecting means (28), by holding the anchor member (31) captive, further serve as means for retaining the anchor member (31) after disengagement from the bolt (18) and for repeatably relocating said bolt (18) in said receiving means (60);
further comprising means for releasably securing the anchor member (31) slidably engaged with its longitudinal axis substantially parallel to the posts (24, 26);
in which the screwing means (125) comprises:
a flute (126);
said flute (126) having a cutting leading edge (128) for cutting a wall material, in which the cutting leading edge (128) is distended and curves back at its proximal edge;
said flute (126) extending to a channel means (127) for receiving the wall material cut;
a thread (129) upon the tip; and
a compression band (130) between the thread (129);
in which the collar (20) comprises flange means for limiting penetration of the collar to substantially flush with an outer surface of the wall;
fin means for limiting axial rotation of the collar (20) after the collar has penetrated the wall;
in which the passing means (22) further serves as means:
for directing the bolt (18) to a proximal end of the anchor member (31) when the anchor member (31) is slidably engaged, and
for directing the bolt (18) to the receiving means (60) when the anchor member (31) is perpendicular to the posts (24, 26);
in which the engaging means (40, 50) comprises:
a pair of elongated ridges (40) on the pair of parallel inner facing surfaces, and
a pair of complementary grooves (50), for engaging the pair of elongated ridges (40), on the pair of outer facing surfaces;
in which the anchor axis rotating means (28, 70, 80) comprises:
a bolt engaging ramp (70) at the proximal end of the anchor member (31) for translating a longitudinal bolt induced force into a rotational force against the anchor member (31), and
a connecting means engaging ramp surface (80) facing the distal end between the proximal and distal ends of the anchor member (31), for translating a longitudinal bolt induced force into a rotational force against the anchor member (31);
in which the collar (20) comprises means for receiving externally applied rotational energy.

16. A wall anchor assembly (10) according to claim 15, ***characterised in that*** said anchor assembly further includes means (40, 50, 140, 142) for securing the anchor member slidably engaged, prior to the anchor assembly's first use.

17. A wall anchor assembly (10) according to claim 16, ***characterised in that*** the securing means includes a protrusion (140) and a cooperating detent (142).

18. A wall anchor assembly (10) according to claim 1, ***characterised in that**:*
said collar (20) having a flange, said flange having a longitudinal radial fin means for restricting rotation around the assembly axis;
means in the screwing configuration:
for slidably engaging the anchor member (31) with the anchor axis substantially parallel to the assembly axis, said engaging means (40, 50) comprising:
a pair of substantially flat surfaces inside the posts;
at least one elongated ridge (40) on at least one of the inside surfaces;
a pair of substantially flat surfaces outside the anchor member, closely fitting within the inside substantially flat surfaces; and
at least one complementary groove (50) on at least one of the outside facing surfaces for engaging the ridge (40):
for transmitting axial rotation from the collar (20) to the anchor member (31), and
for maintaining the anchor axis parallel to the assembly axis;
the ridge (40) and the groove (50) further serving as means:
for sliding the anchor member (31) longitudinally, and
for disengaging to permit rotation of the anchor axis perpendicular to the assembly axis:
said anchor member (31) further having:
a channel (127) on the chordal surface, and
means (125) for screwing through a wall, said screwing means (125) comprising:
a dome having:
a base,
a pointed centering tip at the anchor axis, and
an outer surface there-between, tapering from the base to the pointed centering tip;
a single outwardly facing flute (126) defined by outer edges and extending proximally along one side of said outer surface radially of said anchor axis from said pointed tip to and communicating with and forming an extension of said channel (127), said flute (126) being partially closed at said pointed centering tip along the side of said outer surface radially of said anchor axis opposite said one side because of a diminishing diameter along said outer surface;
said outer edges of said flute (126) comprising a leading cutting edge (128) and a trailing edge;
said leading cutting edge (128) extending radially outward to said base from said pointed tip and diverging from said trailing edge to provide access to said flute (126) and channel (127) for receiving material cut from the wall by said leading cutting edge (128);
an outer thread (129) extending from at the pointed tip and terminating at the base;
said flute (126) and said outer thread (129) being positioned relative to one another so as to serve as screw means for drawing the anchor through the wall structure;
said collar (20), passing means (22), and bolt (18) further serving as means for disengaging the engaging means (40, 50) and for rotating the anchor axis, anchor member (31), and screwing means (125) perpendicular to the assembly axis, to form the assembly into an anchoring configuration;
said distal and proximal tracks (35, 36), extending from the outside substantially flat surfaces, and serving as means for cooperating with edges of the posts (24, 26) to guide the anchor member (31) sliding along the assembly axis;
the means (28, 70, 80) for rotating the anchor axis perpendicular to the posts (24, 26), comprising:
an end ramp (70) at a longitudinal end of the anchor member (31), and
a side ramp (80) having a surface facing the distal end, said side ramp (80) at the outside substantially flat surfaces, and spaced from the tip and from the end ramp (70), for cooperating with the connecting means (28);
said distal and proximal tracks (35, 36) further serving as means for:
after rotation of the anchor axis, stopping the anchor member (31) perpendicular to the assembly axis, and
locating the receiving means (60) to reliably receive the bolt (18).

19. A wall anchor assembly (10) according to claim 1, ***characterised in that*** an axial distance between said proximal and said distal tracks (36, 35) is substantially equal to a width (100) of said posts (24, 26) so that said posts assist in retaining said anchor member (31) substantially perpendicular to said assembly axis after said anchor axis has been rotated out of parallelism with said assembly axis.

20. A method of anchoring a bolt (18) to a wall, said method comprising the steps of:
applying a pointed tip of an anchor member (31) of an anchor assembly (10) to the wall;
engaging a screwdriver to a screw head of the anchor assembly (10);
pressing said screw head with the screwdriver to locate and depress the pointed tip; rotating the screw head with the screwdriver:
to transmit rotation from a collar (20) to a pair of posts (24, 26) to the anchor member (31), slidably engaged to the pair of posts (24, 26) until said anchor assembly (10) is sufficiently inserted in the wall,
inserting a bolt (18) into the collar (20), which collar (20) directs the bolt (18) toward a proximal end of an anchor member (31);
pressing the bolt (18) against a ramp (70) on a proximal end of the anchor member (31); by said pressing, releasing the anchor member (31) from a securing detent and sliding the anchor member (31) distally to disengage a ridge (40) from a groove (50);
after disengaging, pressing a ramp surface (80) facing the distal end, said ramp surface (80) located on the anchor member (31) between the distal and proximal ends of the anchor member, against a protrusion on the posts (24, 26), which ramp surface (80) pressing, together with the pressing against the proximal ramp (70), rotates the anchor member (31) to perpendicular to the posts (24, 26);
said collar (20) locating the bolt (18) against a receiving means (60) on the anchor member (31);
rotating the bolt (18) to engage the receiving means (60) and to pull the chordal surface of the anchor member (31) against the wall, thereby clamping the anchor assembly (10) to the wall.

21. A method as defined in claim 20, ***characterised in that**,* during the step of inserting the anchor assembly (10) in the wall, the screw head is rotated with the screwdriver:
to immediately engage in the wall a screwing thread (129) on the tip;
to cut material of the wall with a cutting leading edge (128) of a flute (126),
to compress outer material of the wall with a compression band (130), and
to swallow the cut material into the flute (126) and thereafter into an adjacent channel (127), and thereafter to a chordal surface, thereby reducing compressing of the outer material, to thereby pull the tip through the wall;
in which rotation is terminated after the tip and threads (126) have penetrated the wall; and
in which the anchor assembly (10) is pressed into the wall without further rotation to engage anti-rotation fins on the collar (20) to the wall, until a flange resists further inward motion.

## Patentansprüche

1. Wandverankerungsbaugruppe (10), die Folgendes umfasst:
eine Baugruppenachse in der longitudinalen Mitte der Baugruppe (10);
einen Kragen (20);
ein Paar sich von dem Kragen (20) erstreckender Pfosten (24, 26);
wobei der Kragen (20) Mittel (22) zum Leiten eines Teils eines Bolzens (18) durch den Kragen (20) ausweist;
Mittel (28) zum Verbinden der Pfosten (24, 26) distal von dem Kragen (20) miteinander; ein Verankerungselement (31), das zwischen den Pfosten (24, 26) sowie zwischen dem Kragen (20) und dem Verbindungsmittel (28) gehalten wird;
wobei das Verankerungselement (31) Folgendes aufweist:
eine Verankerungsachse in der longitudinalen Mitte des Verankerungselementes (31), und
einen Verankerungskörperabschnitt;
eine Schraubkonfiguration, bei der
die Verankerungsachse im Wesentlichen parallel zur Baugruppenachse ist,
der Verankerungskörperabschnitt und die Pfosten (24, 26) einen teilzylindrischen Körperabschnitt ohne Gewinde bilden; und
eine Sehnenfläche auf einer Sehne des teilzylindrischen Körperabschnitts vorhanden ist;
wobei das Verankerungselement (31) ferner Folgendes aufweist:
Mittel (125) zum Schrauben durch die Wand;
Mittel (60) zum Aufnehmen des Bolzens (18) lotrecht zur Verankerungsachse und zum Eingreifen in ein Bolzengewinde an dem Bolzen (18); und
Mittel zum Drehen (28, 70, 80) der Verankerungsachse lotrecht zu den Pfosten (24, 26) und zum Positionieren des Bolzens (18) in dem Aufnahmemittel (60),
wobei das Aufnahmemittel (60) ferner als Mittel dient, um das Verankerungselement (31) gegen die Wand zu ziehen, um die Wandverankerungsbaugruppe (10) an der Wand festzuklemmen;
ein Haltemittel, das Folgendes umfasst:
ein Paar paralleler, einander zugewandter Innenflächen in den Pfosten (24, 26);
ein Paar einander zugewandter Außenflächen an dem Verankerungselement (31), wobei die einander zugewandten Außenflächen eng in die einander zugewandten Innenflächen passen;
ein Paar einander nicht zugewandter Außenflächen an dem Verankerungselement;
**dadurch gekennzeichnet, dass** das Haltemittel ferner Folgendes umfasst:
wenigstens eine proximale Führungsbahn (36), die sich von einer der einander nicht zugewandten Außenflächen über einen Rand der einander zugewandten Flächen hinaus erstreckt, wobei die proximale Führungsbahn (36) nicht in die einander zugewandten Innenflächen passt und somit in einen Rand der einander zugewandten Flächen eingreift; und
wenigstens eine distale Führungsbahn (35), die sich von einer gegenüberliegenden der einander nicht zugewandten Außenflächen über einen Rand der einander zugewandten Flächen hinaus erstreckt, wobei die distale Führungsbahn (35) nicht in die einander zugewandten Innenflächen passt und dadurch in einen anderen Rand der einander zugewandten Flächen eingreift.

2. Wandverankerungsbaugruppe (10) nach Anspruch 1, **dadurch gekennzeichnet, dass** die Verankerungsbaugruppe ferner Folgendes umfasst:
Mittel (40, 50) in der Schraubkonfiguration:
um so in das Verankerungselement (31) einzugreifen, dass die Verankerungsachse im Wesentlichen parallel zur Baugruppenachse ist, und
um eine axiale Rotation vom Kragen (20) auf das Verankerungselement (31) zu übertragen.

3. Wandverankerungsbaugruppe (10) nach Anspruch 2, **dadurch gekennzeichnet, dass** die Pfosten (24, 26), der Kragen (20) und das Verbindungsmittel (28), durch Sichern des Verankerungsmittels (31), ferner als Mittel zum Halten des Verankerungselementes (31) nach dem Lösen von dem Bolzen (18) und zum wiederholbaren Umpositionieren des Bolzens (18) in dem Aufnahmemittel (60) dienen.

4. Wandverankerungsbaugruppe (10) nach Anspruch 1, **dadurch gekennzeichnet, dass** die genannte Verankerungsbaugruppe ferner Folgendes umfasst:
eine Raste als Mittel (140, 142) zum lösbaren Befestigen des Verankerungselementes (31); und
eine Zunge (40) als ein länglicher Vorsprung auf der Innenfläche und eine komplementäre Nut (50) auf der Außenfläche:
um das mit der Verankerungsachse im Eingriff befindliche Verankerungselement (31) im Wesentlichen parallel zu den Pfosten (24, 26) zu halten;
um die axiale Rotation zu übertragen; und
um das Verankerungselement (31) gleitend aus der Parallelität zu lösen.

5. Wandverankerungsbaugruppe (10) nach Anspruch 2, **dadurch gekennzeichnet, dass** das Schraubmittel (125) Folgendes umfasst:
eine Kuppe mit:
einer Basis,
einer zugespitzten Zentrierspitze an der Verankerungsachse, und
einer Außenfläche dazwischen, die sich von der Basis ausgehend zur zugespitzten Zentrierspitze verjüngt;
eine einzelne, nach außen gewandte Rille (126), die von äußeren Rändern definiert wird und proximal entlang einer Seite der Außenfläche radial zu der Verankerungsachse von der zugespitzten Spitze zur Basis verläuft, wobei die Rille (126) an der zugespitzten Zentrierspitze entlang der Seite der Außenfläche radial zu der Verankerungsachse gegenüber der genannten einen Seite aufgrund eines abnehmenden Durchmessers entlang der Außenfläche teilgeschlossen ist;
wobei die äußeren Ränder der Rille (126) eine vordere Schneidkante (128) zum Durchschneiden eines Wandmaterials und eine Hinterkante umfassen;
ein Außengewinde (129), das an der zugespitzten Spitze beginnt und an der Basis endet;
wobei die Rille (126) und das Außengewinde (129) relativ zueinander so positioniert sind, dass sie als Schraubmittel dienen, um die Spitze durch die Wandstruktur zu ziehen, ohne vor dem Außengewinde (129) ein Loch zu bohren;
wobei der Kragen (20), das Leitmittel (22) und der Bolzen (18) ferner als Mittel dienen, um das Eingriffsmittel (40, 50) zu lösen und um die Verankerungsachse, das Verankerungselement (31) und das Schraubmittel (125) lotrecht zu der Baugruppenachse zu drehen, um die Baugruppe zu einer Verankerungskonfiguration zu formen;
wobei die Rille (126) mit einer Verlängerung eines an der Sehnenfläche definierten Kanals (127) in Verbindung ist und eine solche Verlängerung bildet, um den Wandmaterialverschnitt aufzunehmen und um das Wandmaterial aus der Sehnenfläche auszustoßen.

6. Wandverankerungsbaugruppe (10) nach Anspruch 5, **dadurch gekennzeichnet, dass** die Verankerungsbaugruppe ferner ein Kompressionsband (130) zwischen den Gewindegängen (129) umfasst.

7. Wandverankerungsbaugruppe (10) nach Anspruch 5, **dadurch gekennzeichnet, dass** die vordere Schneidkante (128) gestreckt ist und sich auf ihren proximalen Rand zurückkrümmt.

8. Wandverankerungsbaugruppe (10) nach Anspruch 7, **dadurch gekennzeichnet, dass** der Kragen (20) einen Flansch umfasst, um das Eindringen des Kragens (20) zu begrenzen, so dass er im Wesentlichen bündig mit einer Außenfläche der Wand ist.

9. Wandverankerungsbaugruppe (10) nach Anspruch 8, **dadurch gekennzeichnet, dass** Rippen vorgesehen sind, um eine axiale Rotation des Kragens (20) zu begrenzen, nachdem der Kragen in die Wand eingedrungen ist.

10. Wandverankerungsbaugruppe (10) nach Anspruch 2, **dadurch gekennzeichnet, dass** das Leitmittel (22) ferner als Mittel dient zum:
Leiten des Bolzens (18) zu einem proximalen Ende des Verankerungselementes (31), wenn sich das Verankerungselement im Gleiteingriff befindet, und
Leiten des Bolzens (18) zu dem Aufnahmemittel (60), wenn das Verankerungselement (31) lotrecht zu den Pfosten (24, 26) ist.

11. Wandverankerungsbaugruppe (10) nach Anspruch 1, **dadurch gekennzeichnet, dass** das Eingriffsmittel (40, 50) Folgendes umfasst:
eine längliche Leiste (40) auf wenigstens einer der einander zugewandten Innenflächen, und
eine komplementäre Nut (50) auf den einander zugewandten Außenflächen für den Eingriff mit der Leiste (40).

12. Wandverankerungsbaugruppe (10) nach Anspruch 1, **dadurch gekennzeichnet, dass** das Drehmittel (28, 70, 80) ein Verbindungsmittel umfasst, das an der Rampenfläche (80) angreift, die dem distalen Ende zwischen dem proximalen und dem distalen Ende des Verankerungselementes (31) zugewandt ist, um eine durch einen longitudinalen Bolzen induzierte Kraft in eine Rotationskraft gegen das Verankerungselement (31) umzusetzen.

13. Wandverankerungsbaugruppe (10) nach Anspruch 12, **dadurch gekennzeichnet, dass** der Kragen (20) Mittel zum Aufnehmen von extern aufgebrachter Rotationsenergie umfasst.

14. Wandverankerungsbaugruppe (10) nach Anspruch 13, **dadurch gekennzeichnet, dass** das genannte Mittel zum Aufnehmen von extern aufgebrachter Rotationsenergie ein Schraubenkopf wie z.B. ein Kreuzschlitzschraubenkopf ist.

15. Wandverankerungsbaugruppe (10) nach Anspruch 1, **dadurch gekennzeichnet, dass** die Verankerungsbaugruppe ferner Folgendes umfasst:
Mittel (40, 50) in der Schraubkonfiguration:
um das Verankerungselement (31) mit der Verankerungsachse im Wesentlichen parallel zur Baugruppenachse in Eingriff zu bringen, und
um eine axiale Rotation von dem Kragen (20) auf das Verankerungselement (31) zu übertragen;
wobei die Pfosten (24, 26), der Kragen (20) und das Verbindungsmittel (28), durch Sichern des Verankerungselementes (31), ferner als Mittel zum Halten des Verankerungselementes (31) nach dem Lösen von dem Bolzen (18) und zum wiederholbaren Umpositionieren des Bolzens (18) in dem Aufnahmemittel (60) dient;
ferner umfassend Mittel zum lösbaren Befestigen des Verankerungselementes (31) im Gleiteingriff mit seiner longitudinalen Achse im Wesentlichen parallel zu den Pfosten (24,26);
wobei das Schraubmittel (125) Folgendes umfasst:
eine Rille (126);
wobei die Rille (126) eine vordere Schneidkante (128) zum Durchschneiden eines Wandmaterials hat, wobei die vordere Schneidkante (128) gestreckt ist und sich auf ihren proximalen Rand zurückkrümmt;
wobei die Rille (126) zu einem Kanal (127) zur Aufnahme des Wandmaterialverschnitts verläuft;
ein Gewinde (129) an der Spitze; und
ein Kompressionsband (130) zwischen den Gewindegängen (129);
wobei der Kragen (20) einen Flansch zum Begrenzen des Eindringens des Kragens umfasst, so dass dieser im Wesentlichen bündig mit einer Außenfläche der Wand ist;
Rippen zum Begrenzen der axialen Rotation des Kragens (20), nachdem der Kragen in die Wand eingedrungen ist;
wobei das Leitmittel (22) ferner als Mittel dient zum:
Leiten des Bolzens (18) zu einem proximalen Ende des Verankerungselementes (31), wenn sich das Verankerungselement (31) im Gleiteingriff befindet, und
Leiten des Bolzens (18) zum Aufnahmemittel (60), wenn das Verankerungselement (31) lotrecht zu den Pfosten (24, 26) ist;
wobei das Eingriffsmittel (40, 5 0) Folgendes umfasst:
ein Paar länglicher Leisten (40) auf dem Paar paralleler, einander zugewandter Innenflächen, und
ein Paar komplementärer Nuten (50) für den Eingriff mit dem Paar länglicher Leisten (40) auf dem Paar einander zugewandter Außenflächen;
wobei das Verankerungsachsendrehmittel (28, 70, 80) Folgendes umfasst:
eine Bolzenangriffsrampe (70) am proximalen Ende des Verankerungselementes (31), um eine von einem longitudinalen Bolzen induzierte Kraft in eine Rotationskraft gegen das Verankerungselement (31) umzusetzen, und
ein Verbindungsmittel, das an der Rampenfläche (80) angreift, die dem distalen Ende zwischen dem proximalen und dem distalen Ende des Verankerungselementes (31) zugewandt ist, um eine von einem longitudinalen Bolzen induzierte Kraft in eine Rotationskraft gegen das Verankerungselement (31) umzusetzen;
wobei der Kragen (20) Mittel zum Aufnehmen von extern aufgebrachter Rotationsenergie umfasst.

16. Wandverankerungsbaugruppe (10) nach Anspruch 15, **dadurch gekennzeichnet, dass** die Verankezungsbaugruppe ferner Mittel (40, 50, 140, 142) zum Befestigen des Verankerungselementes im Gleiteingriff vor dem ersten Gebrauch der Verankerungsbaugruppe beinhaltet.

17. Wandverankerungsbaugruppe (10) nach Anspruch 16, **dadurch gekennzeichnet, dass** das Befestigungsmittel einen Vorsprung (140) und eine zusammenwirkende Raste (142) beinhaltet.

18. Wandverankerungsbaugruppe (10) nach Anspruch 1, **dadurch gekennzeichnet, dass**:
der Kragen (20) einen Flansch hat, wobei der Flansch eine longitudinale radiale Rippe zum Begrenzen der Rotation um die Baugruppenachse hat;
Mittel in der Schraubkonfiguration:
um das Verankerungselement (31) mit der Verankerungsachse im Wesentlichen parallel zur Baugruppenachse in Gleiteingriff zu bringen, wobei das Eingriffsmittel (40, 50) Folgendes umfasst:
ein Paar im Wesentlichen flacher Oberflächen innerhalb der Pfosten;
wenigstens eine längliche Leiste (40) auf wenigstens einer der Innenflächen;
ein Paar im Wesentlichen flacher Oberflächen außerhalb des Verankerungselementes, die eng in die im Wesentlichen flachen Innenflächen passen; und
wenigstens eine komplementäre Nut (50) auf wenigstens einer der einander zugewandten Außenflächen zum Eingreifen in die Leiste (40):
um die axiale Rotation von dem Kragen (20) auf das Verankerungselement (31) zu übertragen, und
um die Verankerungsachse parallel zur Baugruppenachse zu halten;
wobei die Leiste (40) und die Nut (50) ferner als Mittel dienen zum:
longitudinalen Verschieben des Verankerungselementes (31), und
Lösen, um eine Rotation der Verankerungsachse lotrecht zur Baugruppenachse zuzulassen:
wobei das Verankerungselement (31) ferner Folgendes aufweist:
einen Kanal (127) auf der Sehnenfläche, und
ein Mittel (125) zum Schrauben durch eine Wand, und wobei das Schraubmittel (125) Folgendes umfasst:
eine Kuppel mit:
einer Basis,
einer zugespitzten Zentrierspitze auf der Verankerungsachse, und
einer Außenfläche dazwischen, die sich von der Basis zu der zugespitzten Zentrierspitze verjüngt;
eine einzelne, nach außen gewandte Rille (126), die durch äußere Ränder definiert wird und proximal entlang einer Seite der Außenfläche radial zu der Verankerungsachse von der zugespitzten Spitze zu und in Verbindung mit einer Verlängerung des Kanals (127) und eine solche bildend verläuft, wobei die Rille (126) an der zugespitzten Zentrierspitze entlang der Seite der Außenfläche radial zu der Verankerungsachse gegenüber der genannten einen Seite aufgrund eines abnehmenden Durchmessers entlang der Außenfläche teilgeschlossen ist;
wobei die äußeren Ränder der Rille (126) eine vordere Schneidkante (128) und eine Hinterkante umfassen;
wobei die vordere Schneidkante (128) von der zugespitzten Spitze radial nach außen zu der Basis verläuft und von der Hinterkante divergiert, um Zugang zu der Rille (126) und dem Kanal (127) zum Aufnehmen von Materialverschnitt von der Wand durch die vordere Schneidkante (128) zu bieten;
ein Außengewinde (129), das von der zugespitzten Spitze ausgeht und an der Basis endet;
wobei die Rille (126) und das Außengewinde (129) relativ zueinander so positioniert sind, dass sie als Schraubmittel dienen, um die Verankerung durch die Wandstruktur zu ziehen;
wobei der Kragen (20), das Leitmittel (22) und der Bolzen (18) ferner als Mittel dienen, um das Eingriffsmittel (40, 50) zu lösen und um die Verankerungsachse, das Verankerungselement (31) und das Schraubmittel (125) lotrecht zu der Baugruppenachse zu drehen, um die Baugruppe zu einer Verankerungskonfiguration zu formen;
wobei distale und proximale Führungsbahnen (35, 36) von den im Wesentlichen flachen Außenflächen ausgehen und als Mittel zum Zusammenwirken mit Rändern der Pfosten (24, 26) dienen, um das Verankerungselement (31) gleitend entlang der Baugruppenachse zufuhren;
wobei das Mittel (28, 70, 80) zum Drehen der Verankerungsachse lotrecht zu den Pfosten (24,26) Folgendes umfasst:
eine Endrampe (70) an einem longitudinalen Ende des Verankerungselementes (31), und
eine Seitenrampe (80) mit einer dem distalen Ende zugewandten Fläche, wobei die Seitenrampe (80) an den im Wesentlichen flachen Außenflächen und beabstandet von der Spitze und von der Endrampe (70) zum Zusammenwirken mit dem Verbindungsmittel (28);
wobei die distale und proximale Führungsbahn (35, 36) ferner als Mittel dienen zum:
Stoppen, nach der Rotation der Verankerungsachse, des Verankerungselementes (31) lotrecht zur Baugruppenachse, und
Positionieren des Aufnahmemittels (60), um den Bolzen (18) zuverlässig aufzunehmen.

19. Wandverankerungsbaugruppe (10) nach Anspruch 1, **dadurch gekennzeichnet, dass** ein axialer Abstand zwischen der proximalen und der distalen Führungsbahn (36, 35) im Wesentlichen gleich einer Breite (100) der Pfosten (24, 26) ist, so dass die Pfosten beim Halten des Verankerungselementes (31) im Wesentlichen lotrecht zur Baugruppenachse assistieren, nachdem die Baugruppenachse aus der Parallelität mit der Baugruppenachse gedreht wurde.

20. Verfahren zum Verankern eines Bolzens (18) an einer Wand, wobei das Verfahren die folgenden Schritte umfasst:
Aufbringen einer zugespitzten Spitze eines Verankerungselementes (31) einer Verankerungsbaugruppe (10) an der Wand;
Ansetzen eines Schraubendrehers auf einem Schraubenkopf der Verankerungsbaugruppe (10);
Drücken mit dem Schraubendreher gegen den Schraubenkopf, um die zugespitzte Spitze zu positionieren und einzudrücken,
Drehen des Schraubenkopfes mit dem Schraubendreher:
um die Rotation von einem Kragen (20) auf ein Paar Pfosten (24, 26) auf das Verankerungselement (31) zu übertragen, das gleitend mit dem Paar Pfosten (24, 26) im Eingriff ist, bis die Verankerungsbaugruppe (10) ausreichend weit in der Wand steckt,
Einführen eines Bolzens (18) in den Kragen (20), wobei der Kragen (20) den Bolzen (18) in Richtung auf ein proximales Ende eines Verankerungselementes (31) führt;
Drücken des Bolzens (18) gegen eine Rampe (70) an einem proximalen Ende des Verankerungselementes (31);
durch dieses Drücken, Lösen des Verankerungselementes (31) von einer Befestigungsraste und distales Verschieben des Verankerungselementes (31), um eine Leiste (40) aus einer Nut (50) zu lösen;
nach dem Lösen, Drücken einer dem distalen Ende zugewandten Rampenfläche (80), wobei die Rampenfläche (80) sich an dem Verankerungselement (31) zwischen dem distalen und dem proximalen Ende des Verankerungselementes befindet, gegen einen Vorsprung an den Pfosten (24, 26), wobei durch das Drücken der Rampenflächen (80), in Kombination mit dem Drücken gegen die proximale Rampe (70), das Verankerungselement (31) in eine Position lotrecht zu den Pfosten (24, 26) gedreht wird;
wobei der Kragen (20) den Bolzen (18) gegen ein Aufnahmemittel (60) an dem Verankerungselement (31) positioniert;
Drehen des Bolzens (18), um ihn mit dem Aufnahmemittel (60) in Eingriff zu bringen, und Ziehen der Sehnenfläche des Verankerungselementes (31) gegen die Wand, um die Verankerungsbaugruppe (10) an der Wand festzuklemmen.

21. Verfahren nach Anspruch 20, **dadurch gekennzeichnet, dass** während des Schrittes des Einführens der Verankerungsbaugruppe (10) in die Wand der Schraubenkopf mit den Schraubendreher gedreht wird:
um ein Schraubgewinde (129) an der Spitze unmittelbar in der Wand in Eingriff zu bringen;
um Material der Wand mit einer vorderen Schneidkante (128) einer Rille (126) abzuschneiden;
um Außenmaterial der Wand mit einem Kompressionsband (130) zu komprimieren, und
um das abgeschnittene Material in die Rille (126) und danach in einen benachbarten Kanal (127) und danach zu einer Sehnenfläche abzuführen, so dass die Kompression des Außenmaterials reduziert wird, um dadurch die Spitze durch die Wand zu ziehen;
wobei die Rotation beendet wird, wenn Spitze und Gewinde (126) in die Wand eingedrungen sind; und
wobei die Verankerungsbaugruppe (10) ohne weitere Rotation in die Wand gedrückt wird, um Rotationssicherungsrippen am Kragen (20) mit der Wand in Eingriff zu bringen, bis ein Flansch einer weiteren Einwärtsbewegung Widerstand leistet.

## Revendications

1. Ensemble d'ancrage au mur (10) comprenant:
un axe d'ensemble au niveau du centre longitudinal de l'ensemble (10);
un collet (20);
une paire de montants (24, 26) s'étendant depuis ledit collet (20);
le collet (20) possédant un moyen (22) pour faire passer une partie d'un boulon (18) à travers ledit collet (20);
un moyen (28) pour relier l'un à l'autre les montants (24, 26), de manière distale par rapport au collet (20);
un élément d'ancrage (31), emprisonné entre lesdits montants (24, 26) et entre ledit collet (20) et ledit moyen de connexion (28);
ledit élément d'ancrage (31) comportant:
un axe d'ancrage au niveau du centre longitudinal de l'élément d'ancrage (31), et
une partie formant corps d'ancrage;
une configuration de vissage dans laquelle:
l'axe d'ancrage est sensiblement parallèle à l'axe d'ensemble,
la partie formant corps d'ancrage et les montants (24, 26) forment une partie formant corps partiellement cylindrique sans filets; et
il existe une surface de corde sur une corde de la partie formant corps partiellement cylindrique;
ledit élément d'ancrage (31) comportant en outre:
un moyen (125) pour effectuer un vissage à travers le mur;
un moyen (60) pour recevoir le boulon (18) perpendiculaire à l'axe d'ancrage et pour entrer en prise avec un filetage de boulon sur ledit boulon (18); et
des moyens (28, 70, 80) pour faire tourner l'axe d'ancrage perpendiculairement aux montants (24, 26) et pour positionner ledit boulon (18) dans ledit moyen de réception (60), lequel moyen de réception (60) sert en outre de moyen pour entraîner élément d'ancrage (31) contre le mur afin de serrer l'ensemble d'ancrage au mur (10) sur le mur;
un moyen de retenue comprenant:
une paire de surfaces intérieures parallèles en regard dans les montants (24; 26);
une paire de surfaces extérieures en regard sur l'élément d'ancrage (31), lesdites surfaces extérieures en regard s'emboîtant étroitement à l'intérieur des surfaces intérieures en regard;
une paire de surfaces extérieures qui ne sont pas en regard sur l'élément d'ancrage; **caractérisé en ce que** ledit moyen de retenue comprend en outre:
au moins une voie de guidage proximale (36) s'étendant depuis l'une des surfaces extérieures qui ne sont pas en regard au-delà d'un bord des surfaces en regard, ladite voie de guidage proximale (36) ne s'emboîtant pas à l'intérieur des surfaces intérieures en regard et étant ainsi en contact avec un bord des surfaces en regard; et
au moins une voie de guidage distale (35) s'étendant depuis l'une opposée des surfaces extérieures qui ne sont pas en regard au-delà d'un bord des surfaces en regard, ladite voie de guidage distale (35) ne s'emboîtant pas à l'intérieur des surfaces intérieures en regard et étant ainsi en contact avec un autre bord des surfaces en regard.

2. Ensemble d'ancrage au mur (10) selon la revendication 1, **caractérisé en ce que** ledit ensemble d'ancrage comprend en outre des moyens (40, 50) dans la configuration de vissage:
pour engager l'élément d'ancrage (31) avec l'axe d'ancrage sensiblement parallèlement à l'axe d'ensemble, et
pour transmettre la rotation axiale du collet (20) à l'élément d'ancrage (31).

3. Ensemble d'ancrage au mur (10) selon la revendication 2, **caractérisé en ce que** les montants (24, 26), ledit collet (20) et ledit moyen de connexion (28), en tenant l'élément d'ancrage (31) emprisonné, servent en outre de moyen pour retenir l'élément d'ancrage (31) après le désengagement du boulon (18) et pour repositionner de manière répétée ledit boulon (18) dans ledit moyen de réception (60).

4. Ensemble d'ancrage au mur (10) selon la revendication 1, **caractérisé en ce que** ledit ensemble d'ancrage comprend en outre:
un cran d'arrêt comme moyen (140, 142) pour fixer de manière libérable l'élément d'ancrage (31); et
une languette (40) comme saillie allongée sur la surface intérieure et une rainure
complémentaire (50) sur la surface extérieure:
pour maintenir l'élément d'ancrage (31) engagé avec l'axe d'ancrage sensiblement parallèle aux montants (24, 26),
pour transmettre la rotation axiale; et
pour libérer de façon coulissante l'élément d'ancrage (31) de sa position parallèle.

5. Ensemble d'ancrage au mur (10) selon la revendication 2, **caractérisé en ce que** le moyen de vissage (125) comprend:
un dôme comportant:
une base,
une pointe de centrage pointue au niveau de l'axe d'ancrage, et
une surface extérieure entre elles, s'effilant de la base à la pointe de centrage pointue;
une seule cannelure tournée vers l'extérieur (126) définie par les bords extérieurs et s'étendant de manière proximale le long d'un côté de ladite surface extérieure radialement par rapport audit axe d'ancrage depuis ladite pointe pointue jusqu'à ladite base, ladite cannelure (126) étant partiellement fermée au niveau de ladite pointe de centrage pointue le long du côté de ladite surface extérieure radialement par rapport audit axe d'ancrage à l'opposé dudit un côté, en raison d'un diamètre décroissant le long de ladite surface extérieure;
lesdits bords extérieurs de ladite cannelure (126) comprenant un tranchant d'attaque (128), pour découper un matériau mural, et un bord arrière;
un filetage extérieur (129) s'étendant à partir de la pointe pointue et se terminant au niveau de la base;
ladite cannelure (126) et ledit filetage extérieur (129) étant positionnés l'un par rapport à l'autre de façon à servir de moyen formant vis pour entraîner la pointe à travers la structure murale sans percer de trou à l'avant dudit filetage extérieur (129);
ledit collet (20), ledit moyen de passage (22) et ledit boulon (18) servant en outre de moyen pour désengager les moyens d'engagement (40, 50) et pour faire tourner l'axe d'ancrage, l'élément d'ancrage (31) et le moyen de vissage (125) perpendiculairement à l'axe d'ensemble, afin de former l'ensemble en une configuration d'ancrage;
ladite cannelure (126) communiquant avec et formant un prolongement d'une gorge (127) définie sur la surface de corde pour recevoir les copeaux de matériau mural et pour expulser ledit matériau mural de la surface de corde.

6. Ensemble d'ancrage au mur (10) selon la revendication 5, **caractérisé en ce que** ledit ensemble d'ancrage comprend en outre une bande de compression (130) entre le filet (129).

7. Ensemble d'ancrage au mur (10) selon la revendication 5, **caractérisé en ce que** le tranchant d'attaque (128) est étiré et se recourbe vers l'arrière au niveau de son bord proximal.

8. Ensemble d'ancrage au mur (10) selon la revendication 7, **caractérisé en ce que** le collet (20) comprend un moyen formant collerette pour limiter la pénétration du collet (20) sensiblement au ras d'une surface extérieure du mur.

9. Ensemble d'ancrage au mur (10) selon la revendication 8, **caractérisé en ce que** moyens formant ailettes sont prévus pour limiter la rotation axiale du collet (20) après la pénétration du collet dans le mur.

10. Ensemble d'ancrage au mur (10) selon la revendication 2, **caractérisé en ce que** le moyen de passage (22) sert en outre de moyen:
pour diriger le boulon (18) vers une extrémité proximale de l'élément d'ancrage (31) lorsque l'élément d'ancrage est engagé de façon coulissante, et
pour diriger le boulon (18) vers le moyen de réception (60) lorsque l'élément d'ancrage (31) est perpendiculaire aux montants (24, 26).

11. Ensemble d'ancrage au mur (10) selon la revendication 1, **caractérisé en ce que** les moyens d'engagement (40, 50) comprennent:
une arrête allongée (40) sur au moins l'une des surfaces intérieures en regard, et
une rainure complémentaire (50) sur la surface extérieure en regard, pour coopérer avec l'arrête (40).

12. Ensemble d'ancrage au mur (10) selon la revendication 1, **caractérisé en ce que** les moyens de rotation (28, 70, 80) comprennent un moyen de connexion coopérant avec une surface inclinée (80) tournée vers l'extrémité distale entre les extrémités proximale et distale de l'élément d'ancrage (31) pour translater une force longitudinale induite par un boulon en une force de rotation contre l'élément d'ancrage (31).

13. Ensemble d'ancrage au mur (10) selon la revendication 12, **caractérisé en ce que** le collet (20) comprend un moyen pour recevoir une énergie rotationnelle appliquée de façon externe.

14. Ensemble d'ancrage au mur (10) selon la revendication 13, **caractérisé en ce que** ledit moyen pour recevoir une énergie rotationnelle appliquée de façon externe est une tête de vis, par exemple une tête de type cruciforme.

15. Ensemble d'ancrage au mur (10) selon la revendication 1, **caractérisé en ce que** ledit ensemble d'ancrage comprend en outre:
des moyens (40, 50) dans la configuration de vissage:
pour engager l'élément d'ancrage (31) avec l'axe d'ancrage sensiblement parallèlement à l'axe d'ensemble, et
pour transmettre une rotation axiale du collet (20) à l'élément d'ancrage (31);
dans lequel les montants (24, 26), ledit collet (20) et ledit moyen de connexion (28), en maintenant l'élément d'ancrage (31) emprisonné, servent en outre de moyen pour retenir l'élément d'ancrage (31) après le désengagement du boulon (18) et pour repositionner de façon répétée ledit boulon (18) dans ledit moyen de réception (60);
comprenant en outre un moyen pour fixer de manière libérable l'élément d'ancrage (31) engagé de façon coulissante avec son axe longitudinal sensiblement parallèle aux montants (24, 26);
dans lequel le moyen de vissage (125) comprend:
une cannelure (126);
ladite cannelure (126) possédant un tranchant d'attaque (128) pour découper un matériau mural, dans lequel le tranchant d'attaque (128) est étiré et se recourbe vers l'arrière au niveau de son bord proximal;
ladite cannelure (126) s'étendant jusqu'à un moyen formant gorge (127) pour recevoir les copeaux de matériau mural;
un filetage (129) sur la pointe; et
une bande de compression (130) entre le filetage (129);
dans lequel le collet (20) comprend un moyen formant collerette pour limiter la pénétration du collet sensiblement au ras d'une surface extérieure du mur;
des moyens formant ailettes pour limiter la rotation axiale du collet (20) après la pénétration du collet dans le mur;
dans lequel le moyen de passage (22) sert en outre de moyen:
pour diriger le boulon (18) vers une extrémité proximale de l'élément d'ancrage (31) lorsque l'élément d'ancrage (31) est engagé de façon coulissante,
pour diriger le boulon (18) vers le moyen de réception (60) lorsque l'élément d'ancrage (31) est perpendiculaire aux montants (24, 26);
dans lequel les moyens d'engagement (40, 50) comprennent:
une paire d'arrêtes allongées (40) sur la paire de surfaces intérieures parallèles en regard, et
une paire de rainures complémentaires (50), pour coopérer avec la paire d'arrêtes allongées (40), sur la paire de surfaces extérieures en regard;
dans lequel les moyens de rotation d'axe d'ancrage (28, 70, 80) comprennent:
une rampe d'engagement de boulon (70) à l'extrémité proximale de l'élément d'ancrage (31) pour translater une force longitudinale induite par un boulon en une force de rotation contre l'élément d'ancrage (31); et
une surface inclinée d'engagement de moyen de connexion (80) tournée vers l'extrémité distale entre les extrémités proximale et distale de l'élément d'ancrage (31), pour translater une force longitudinale induite par un boulon en une force de rotation contre l'élément d'ancrage (31);
dans lequel le collet (20) comprend un moyen pour recevoir une énergie rotationnelle appliquée de façon externe.

16. Ensemble d'ancrage au mur (10) selon la revendication 15, **caractérisé en ce que** ledit ensemble d'ancrage comprend en outre des moyens (40, 50, 140, 142) pour fixer l'élément d'ancrage engagé de façon coulissante, avant la première utilisation de l'ensemble d'ancrage.

17. Ensemble d'ancrage au mur (10) selon la revendication 16, **caractérisé en ce que** les moyens de fixation comprennent une saillie (140) et un cran d'arrêt coopérant (142).

18. Ensemble d'ancrage au mur (10) selon la revendication 1, **caractérisé en ce que**:
ledit collet (20) possède une collerette, ladite collerette possédant des moyens formant ailettes radiales longitudinales pour limiter la rotation autour de l'axe d'ensemble;
des moyens dans la configuration de vissage:
pour engager de façon coulissante l'élément d'ancrage (31) avec l'axe d'ancrage sensiblement parallèlement à l'axe d'ensemble, lesdits moyens d'engagement (40, 50) comprenant:
une paire de surfaces sensiblement planes à l'intérieur des montants;
au moins une arrête allongée (40) sur au moins l'une des surfaces intérieures;
une paire de surfaces sensiblement planes à l'extérieur de l'élément d'ancrage, s'emboîtant étroitement à l'intérieur des surfaces intérieures sensiblement planes; et
au moins une rainure complémentaire (50) sur au moins l'une des surfaces extérieures en regard pour coopérer avec l'arrête (40):
pour transmettre une rotation axiale du collet (20) à l'élément d'ancrage (31), et
pour maintenir l'axe d'ancrage parallèle à l'axe d'ensemble;
l'arrête (40) et la rainure (50) servant en outre de moyen;
pour faire coulisser longitudinalement l'élément d'ancrage (31), et
pour désengager afin de permettre la rotation de l'axe d'ancrage perpendiculairement à l'axe d'ensemble:
ledit élément d'ancrage (31) comportant en outre:
une gorge (127) sur la surface de corde, et
un moyen (125) pour effectuer un vissage à travers un mur, ledit moyen de vissage (125) comprenant:
un dôme possédant:
une base,
une pointe de centrage pointue au niveau de l'axe d'ancrage, et
une surface extérieure entre elles, s'effilant de la base à la pointe de centrage pointue;
une seule cannelure tournée vers l'extérieur (126) définie par les bords extérieurs et s'étendant de manière proximale le long d'un côté de ladite surface extérieure radialement par rapport audit axe d'ancrage depuis ladite pointe pointue vers, communiquant avec et formant un prolongement de ladite gorge (127), ladite cannelure (126) étant partiellement fermée au niveau de ladite pointe de centrage pointue le long du côté de ladite surface extérieure radialement par rapport audit axe d'ancrage à l'opposé dudit un côté, en raison d'un diamètre décroissant le long de ladite surface extérieure;
lesdits bords extérieurs de ladite cannelure (126) comprenant un tranchant d'attaque (128) et un bord arrière;
ledit tranchant d'attaque (128) s'étendant radialement vers l'extérieur vers ladite base depuis ladite pointe pointue et divergeant depuis ledit bord arrière pour créer un accès à ladite cannelure (126) et à ladite gorge (127) afin de recevoir le matériau découpé du mur par ledit tranchant d'attaque (128);
un filetage extérieur (129) s'étendant depuis la pointe pointue et se terminant au niveau de la base;
ladite cannelure (126) et ledit filetage extérieur (129) étant positionnés l'un par rapport à l'autre de façon à servir de moyen formant vis pour entraîner l'ancrage à travers la structure murale;
ledit collet (20), ledit moyen de passage (22) et ledit boulon (18) servant en outre de moyen pour désengager les moyens d'engagement (40, 50) et pour faire tourner l'axe d'ancrage, l'élément d'ancrage (31) et le moyen de vissage (125) perpendiculairement à l'axe d'ensemble, afin de former l'ensemble en une configuration d'ancrage;
lesdites voies de guidage distale et proximale (35, 36), s'étendant depuis la surface extérieure sensiblement plane, et servant de moyen pour coopérer avec les bords des montants (24, 26) afin de guider l'élément d'ancrage (31) coulissant le long de l'axe d'ensemble;
les moyens (28, 70, 80) pour faire tourner l'axe d'ancrage perpendiculairement aux montants (24, 26), comprenant:
une rampe d'extrémité (70) à une extrémité longitudinale de l'élément d'ancrage (31), et
une rampe latérale (80) présentant une surface tournée vers l'extrémité distale, ladite rampe latérale (80) étant située au niveau des surfaces extérieures sensiblement planes, et espacée de la pointe et de la rampe d'extrémité (70), pour coopérer avec le moyen de connexion (28);
lesdites voies de guidage distale et proximale (35, 36) servant en outre de moyen pour:
après la rotation de l'axe d'ancrage, arrêter l'élément d'ancrage (31) perpendiculaire à l'axe d'ensemble, et
positionner le moyen de réception (60) afin de recevoir le boulon (18) de manière fiable.

19. Ensemble d'ancrage au mur (10) selon la revendication 1, **caractérisé en ce qu'**une distance axiale entre lesdites voies de guidage proximale et distale (36, 35) est sensiblement égale à une largeur (100) desdits montants (24, 26) de sorte que lesdits montants aident à retenir ledit élément d'ancrage (31) sensiblement perpendiculairement audit axe d'ensemble après la rotation dudit axe d'ancrage hors de son parallélisme avec ledit axe d'ensemble.

20. Procédé d'ancrage d'un boulon (18) à un mur, ledit procédé comprenant les étapes consistant à:
appliquer une pointe pointue d'un élément d'ancrage (31) d'un ensemble d'ancrage (10) sur le mur;
engager un tournevis dans une tête de vis de l'ensemble d'ancrage (10);
presser ladite tête de vis avec le tournevis pour positionner et enfoncer la pointe pointue; tourner la tête de vis à l'aide du tournevis:
pour transmettre la rotation d'un collet (20) à une paire de montants (24, 26) à l'élément d'ancrage (31), engagé de façon coulissante sur la paire de montants (24, 26) jusqu'à ce que ledit ensemble d'ancrage (10) soit suffisamment inséré dans le mur,
insérer un boulon (18) dans le collet (20), lequel le collet (20) dirige le boulon (18) vers une extrémité proximale d'un élément d'ancrage (31);
presser le boulon (18) contre une rampe (70) sur une extrémité proximale de l'élément d'ancrage (31);
par ladite pression, libérer l'élément d'ancrage (31) d'un cran d'arrêt de fixation et faire coulisser distalement l'élément d'ancrage (31) pour désengager une arrête (40) d'une rainure (50);
après le désengagement, presser une surface inclinée (80) tournée vers l'extrémité distale, ladite surface inclinée (80) étant positionnée sur l'élément d'ancrage (31) entre les extrémités distale et proximale de l'élément d'ancrage, contre une saillie sur les montants (24, 26), laquelle pression de la surface inclinée (80), en même temps que la pression contre la rampe proximale (70), fait tourner l'élément d'ancrage (31) perpendiculairement aux montants (24, 26);
ledit collet (20) positionnant le boulon (18) contre un moyen de réception (60) sur l'élément d'ancrage (31);
faire tourner le boulon (18) pour engager le moyen de réception (60) et pour tirer la surface de corde de l'élément d'ancrage (31) contre le mur, serrant ainsi l'ensemble d'ancrage (10) sur le mur.

21. Procédé selon la revendication 20, **caractérisé en ce que**, pendant l'étape d'insertion de l'ensemble d'ancrage (10) dans le mur, la tête de vis est tournée à l'aide du tournevis:
pour engager immédiatement dans le mur un filetage de vissage (129) sur la pointe;
pour découper le matériau du mur à l'aide d'un tranchant d'attaque (128) d'une cannelure (126),
pour comprimer le matériau extérieur du mur à l'aide d'une bande de compression (130), et
pour avaler le matériau découpé dans la cannelure (126) et par la suite dans une gorge adjacente (127), et ensuite vers une surface de corde, réduisant ainsi la compression du matériau extérieur, pour tirer ainsi la pointe à travers le mur;
dans lequel la rotation se termine après que la pointe et le filetage (129) ont pénétré dans le mur; et
dans lequel l'ensemble d'ancrage (10) est pressé dans le mur sans aucune rotation supplémentaire pour engager des ailettes anti-rotation sur le collet (20) sur le mur, jusqu'à ce qu'une collerette résiste à tout déplacement supplémentaire vers l'intérieur.
